# EUROPEAN PATENT SPECIFICATION

(11) **EP 2 244 853 B1**
(45) Date of publication and mention of the grant of the patent: **30.09.2015**
(21) Application number: 09703608.1
(22) Date of filing: 21.01.2009
(51) Int. Cl.: B23D 61/02, B27B 33/08, B23D 61/00, B27B 33/00

(54) **CIRCULAR SAW BLADE WITH ELLIPTICAL GULLETS**
KREISSÄGEBLATT MIT ELLIPSENFÖRMIGEN KERBEN
LAME DE SCIE CIRCULAIRE À CREUX DE DENT ELLIPTIQUES

(30) Priority: 22.01.2008 US 11806
(43) Date of publication of application: 03.11.2010
(73) Proprietor: Saint-Gobain Abrasives, Inc., Worcester, MA 01615 (US); SAINT-GOBAIN ABRASIFS, 78700 Conflans Sainte Honorine (FR)
(72) Inventor: HEYEN, Andre R. G., B-4960 Malmedy (BE)
(74) Representative: Zimmermann & Partner Patentanwälte mbB
(86) International application number: PCT/US2009/031548
(87) International publication number: WO 2009/094378

(56) References cited:
- WO-A1-80/00320
- WO-A1-2006/115628
- WO-A1-2007/066815
- US-A- 4 705 017
- US-A- 4 867 025
- US-A1- 2002 112 589
- US-B1- 6 408 838
- US-B2- 6 681 674

## Description

### FIELD OF THE INVENTION

The invention relates to saw blades, and more particularly, to circular saw blades having gullets designed to reduce fatigue and increase the life of the blade, as per the preambles of claims 1 and 10.

### BACKGROUND OF THE INVENTION

Conventional circular saw blades typically include a circular steel core having a series of cutters or teeth spaced along its perimeter. Gullets, in the form of cutouts extending inwardly from the periphery of the blade, are often interspaced between the cutters to aid cutting, by relieving stresses in the blade and removing swarf. A variety of gullet configurations may be used. The actual gullet configuration employed for a particular blade is based on the cutting application(s) for which the blade is expected to be used.

Saw blades having relatively narrow gullets have been found useful in sawing of construction material with portable power saws, and in other masonry cutting applications on stationary machines, where smooth cutting action is desired. It has been found that the smoothness of cutting action is enhanced when the cutters are placed relatively close to one another, such as provided by the use of relatively narrow gullets. However, cracks tend to propagate from the tightly radiused ends of these gullets, particularly if the blade is exposed to high radial pressure. This problem is exacerbated on blades in which a fatigue barrier has been surpassed. Alternatively, saw blades having relatively wide gullets may be used. These gullets typically have a relatively large radius at their inner ends, which have been found to provide the blade with relatively high fatigue strength. These gullets may thus be beneficial in relatively high-stress cutting environments, such as floor sawing of asphalt or concrete, in which other blade types tend to fail due to stress cracks propagating from the gullets.

Keyhole-shaped gullets attempt to combine benefits of both narrow and wide gullets. These gullets enable the cutters of a blade to be positioned relatively close to one another (e.g., so as to provide a smooth cutting action) while also providing each gullet with a relatively large radius at its radially inner end (e.g., so as to help reduce crack formation). While keyhole gullets may exhibit improved characteristics over the narrow and wide gullets in some applications, they are not without drawbacks. For example, results achieved with keyhole gullets have been less than optimal in applications involving difficult to cut materials such as steel or a relatively heterogeneous mix of workpiece materials, such as steel reinforced concrete. Under these conditions, cracks have been found to propagate from the ends or sides of the gullets, which may compromise user safety and saw performance. WO 2006/115628 A1 relates to a circular saw blade having gullets which include a neck portion having side walls that fair divergently into base which is generally elliptical, and includes a radially innermost linear portion 30, as per the preamble of claim 1.

There is a need, therefore, for improved gullets suitable for circular saw blades.

### SUMMARY OF THE INVENTION

The present invention provides a circular saw blade as per claim 1 or a circular saw blade as per claim 10. The saw blade includes a circular core having a first planar side and a second planar side, a central arbor hole, and an outer perimeter. A plurality of cutting elements is at the outer perimeter of the core. In addition, there are one or more gullets extending radially inward from the perimeter of the core. Each gullet includes a shape that includes at least one elongated curve that enlarges radii in gullet areas prone to cracking, relative to other gullet areas. In one such embodiment, each gullet includes three or more elliptical shapes corresponding to three different gullet areas. In one specific such configuration, the shape of the gullet includes two curved sides, each connected to a radially inward curved bottom. The bottom is shaped like the elongated side of a first elliptical shape, and each of the two sides is shaped like the elongated side of a second elliptical shape. In one such case, the gullet includes an opening that defines the two sides and the bottom. In another such case, the gullet includes a slit that defines the two sides and the bottom. In another such case, the first and the second elliptical shapes are symmetrical about their respective long and short axes. Alternatively, at least one of the first and the second elliptical shapes can be asymmetrical about at least one of its long and short axes. In another such case, the first elliptical shape has short and long axes that are both shorter than respective short and long axes of the second elliptical shape. The core may include, for example, two or more layers operatively coupled via at least one of a bond material and a mechanical fastener (as opposed to a single layer or unitary blade). In one such case, the core is a sandwich-type core that includes a middle layer of sound-damping material bonded between the first and second planar sides (e.g., cork, resin, copper, or soft iron). The core can be made, for example, of steel and/or non-metallic material, or other suitable material. The cutting elements may include, for example, bonded abrasive segments, a single layer of abrasives, or teeth, or a combination thereof. In one particular configuration, there is at least one gullet between neighboring cutting elements.

The features and advantages described herein are not all-inclusive and, in particular, many additional features and advantages will be apparent to one of ordinary skill in the art in view of the drawings, specification, and claims. Moreover, it should be noted that the language used in the specification has been principally selected for readability and instructional purposes, and not to limit the scope of the inventive subject matter.

### BRIEF DESCRIPTION OF THE DRAWINGS

In the accompanying drawings, reference characters refer to the same parts throughout the different views. The drawings are not necessarily to scale; emphasis has instead been placed upon illustrating the principles of the invention. Of the drawings:
Figures 1a and 1b illustrate a circular saw blade configured with elliptical gullets, in accordance with an embodiment of the present invention.
Figures 1c, 1d, and 1e illustrate details associated with the elliptical gullets shown in Figure 1a, in accordance with one such embodiment.
Figures 2a and 2b illustrate a circular saw blade configured with elliptical gullets, in accordance with another embodiment of the present invention.
Figures 2c and 2d illustrate details associated with the elliptical gullets shown in Figure 2a, in accordance with one such embodiment.
Figures 3a through 3e each illustrate conventional gullets having circular shaped portions that are prone to cracking.

### DETAILED DESCRIPTION OF THE PREFERRED EMBODIMENTS

An improved gullet for circular saw blades is disclosed. The gullet design employs one or more elliptical shapes to maximize the radius at one or more "weak" regions of conventional gullet designs employing circular shapes, such as each side and bottom of the circular portion at the radially innermost point of typical gullet designs. Any type of circular saw blade can employ the elliptical gullets, including blades having cutting teeth, blades having abrasive segments, and blades having a core made up of one or more layers.

### General Overview

Conventional saw blades typically include a steel core (e.g., single and double layer cores, as well as sandwich-type cores that include a middle or 'sandwiched' layer of a different material such as epoxy, glue, cork, resin, copper, or soft iron). As previously discussed, such existing blades have gullets in the form of cutouts extending inwardly from the periphery of the blade. These gullets are often interspaced between the cutters, to aid cutting and relieve stresses during cutting operation, as well as during the manufacturing process. On conventional blades, the gullets typically include circular shapes in areas that are prone to cracking.

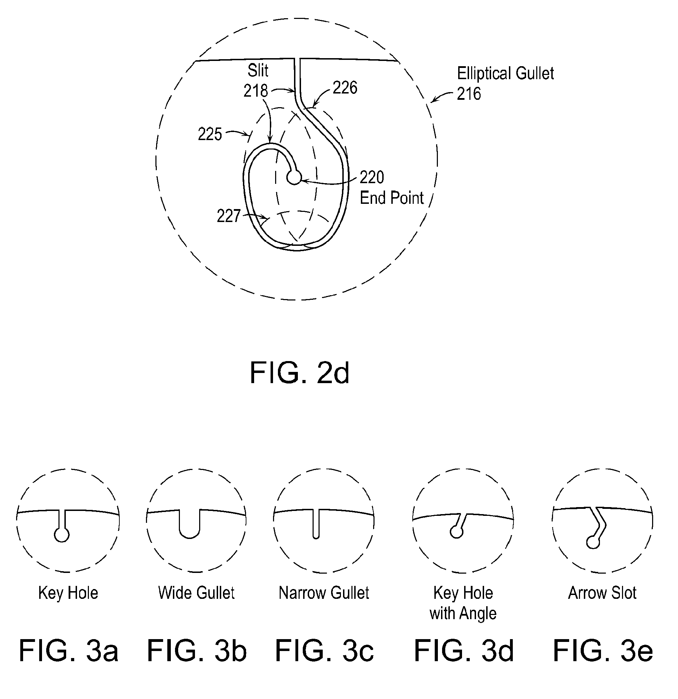

In contrast, embodiments of the present invention employ gullets having elliptical qualities. In particular, each elliptical gullet includes at least one elliptical shape having its long axis along weak areas associated with circular gullets. These weak areas include, for example, the sides and bottom of the radially inward circular portion of keyhole gullets having a neck portion that opens into a circle portion (such as shown in Figures 3a, 3d, and 3e). Note that the neck portion may be on an angle (as best illustrated in Figure 3d) or have an arrow-shape (as best illustrated in Figure 3e). Other example weak gullet areas include the radially most inward semi-circle portion of narrow and wide gullets (such as shown in Figures 3b and 3c). Maximizing the radius at one or more of these weak locations renders the gullet more resistant to fatigue and cracking. The short axes of the elliptical shapes are provided along gullet areas where cracks are less likely to start spontaneously.

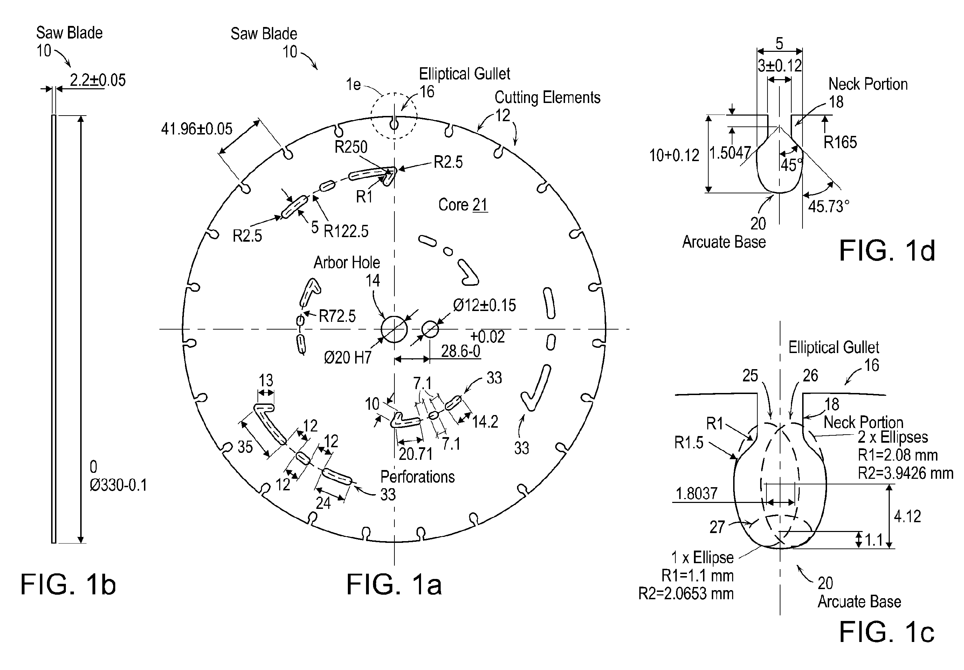

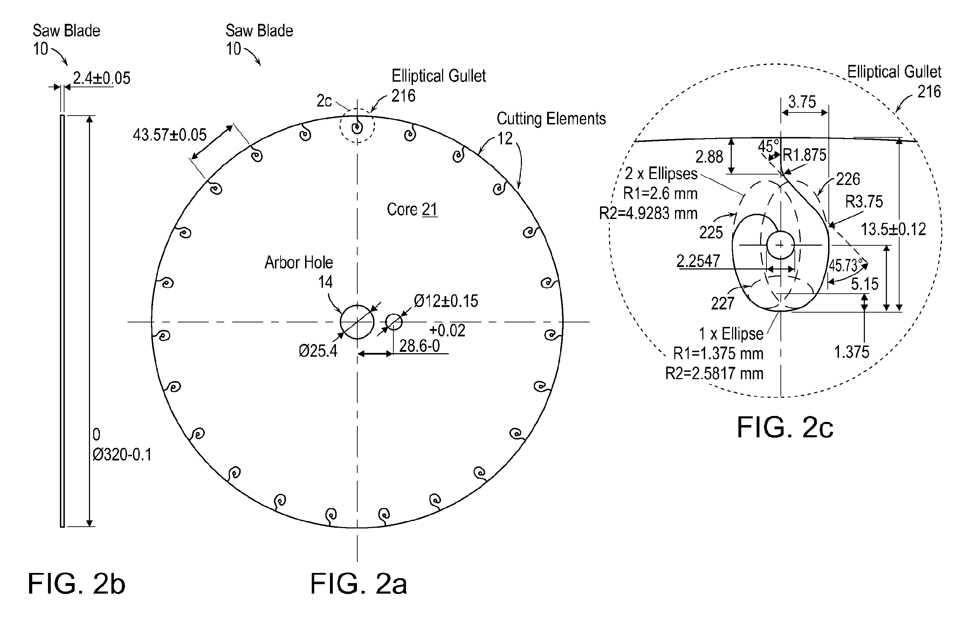

In addition, the cutout design of the elliptical gullet may vary as well, so long as a long axis of the gullet design is maintained at the known weak areas. For instance, one embodiment provides a generally open-style drop gullet that has a cutout including a pair of first elliptical shapes, each having its long axis in the radial direction of the blade so as to elongate the gullet sides, and/or a second elliptical shape having its long axis in the axial direction of the blade so as to elongate the gullet bottom (as will be discussed with reference to Figures 1a-e). An alternative embodiment provides a generally slit-style gullet having a slit that essentially traces the outline of the open-style drop gullet previously described (as will be discussed with reference to Figures 2a-d). As is known, the term "axial" generally refers to a direction that is substantially parallel to the saw blade's center of rotation. The term "radial" generally refers to a direction transverse to the axial direction.

As previously noted, the elliptical gullet is not limited to any particular type of saw blade. Rather, the elliptical gullets may be implemented with blades having teeth (such as for cutting wood or plastic) or abrasive segments (such as for cutting masonry or other very hard materials). Likewise, the elliptical gullets may be implemented with blades having single layer cores, double layer cores, and sandwich-type cores (e.g., for reducing noise in various cutting applications).

### Saw Blade and Gullet Examples

Figures 1a through 1e illustrate a circular saw blade configured with elliptical gullets.

As can be seen, the circular saw blade 10 has peripheral cutting elements 12 separated by a series of elliptical gullets 16.

In the embodiment shown, and as best illustrated in Figure 1a, blade 10 includes a core 21, having an arbor hole 14 through which the blade 10 may be mounted and fastened to the spindle of a circular saw or other suitable machine as conventionally done (e.g., with a threaded fastener). In some embodiments, the blade 10 may further include a bushing such as described in U.S. Patent Application Publication No. 2006/0185492, and/or an assembly for accommodating multiple bore sizes such as described in U.S. Patent Application Publication No. 2006/0266176.

Saw blades configured in accordance with embodiments of the present invention can be used in any number of applications. For instance, saw blade 10 can be installed on a gasoline powered handheld saw (e.g., STIHL TS760, manufactured by Andreas Stihl AG), and used to dry cut a steel plate. Likewise, saw blade 10 can be installed onto a floor saw (e.g., Clipper CSB1 P13, manufactured by Saint-Gobain SA), and used to wet cut concrete. Likewise, saw blade 10 can be installed onto an automatic, 14 HP (10.3kW) cut-off sawing machine (e.g., HUARD 30V53, manufactured by HUARD), and used to cut a steel or plastic tube. Numerous suitable machines and applications will be apparent in light of this disclosure.

As shown, the core 21 is substantially circular in shape. In one example embodiment, the core includes two discrete outer layers that are mechanically fastened directly to one another (e.g., via welds, rivets, and/or nut-and-bolt arrangement). Alternatively, the core 21 may be a sandwich-type core, where two discrete outer layers sandwich an inner layer of noise-damping material such as cork, glue, epoxy or other suitable damping material (e.g., resin, copper, or soft iron). Alternatively, the core 21 may be integrally formed through a suitable metrology or molding process (e.g., metal casting, injection molding, hot-pressing, cold-pressing, etc), so long as the elliptical gullets 16 can be provided (e.g., in situ via pressure molding, machined, or otherwise formed). The outer layers of core 21, whether they are discrete or integral in nature, may be fabricated from substantially any material having sufficient strength for the cutting application or applications at hand. Examples of suitable core materials include steel, aluminum, titanium, bronze, their composites and alloys, and combinations thereof (e.g., ANSI 4130 steel and aluminum alloys, 2024, 6065 and 7178). Alternatively, for some applications, reinforced plastics or non-metallic composites may be used to construct the core 21.

The core 21 may have other features, in addition to cutting elements 12 and elliptical gullets 16. For example, and as best illustrated in Figure 1a, the core 21 includes one or more perforations 33 extending through the central core, along a circumference disposed concentrically with, and between, the arbor hole 14 and the periphery of blade 10. The perforations are arranged to form annular windows through the core 21 that corresponds to a predetermined cutting depth during rotational operation of the blade 10. In example embodiment, the radially innermost set of perforations 33 form a first annular window corresponding to a first cutting depth, and the radially outermost set of perforations 33 form a second annular window corresponding to a second cutting depth. Additional details of circular saw blades having one or more cutting depth gauges are provided, for example, in U.S. Patent No. 7210474. Other functional features, such as for balancing the blade, indicating source of the blade, reducing operating noise of the blade, and indicating proper mounting of the blade, can also be employed.

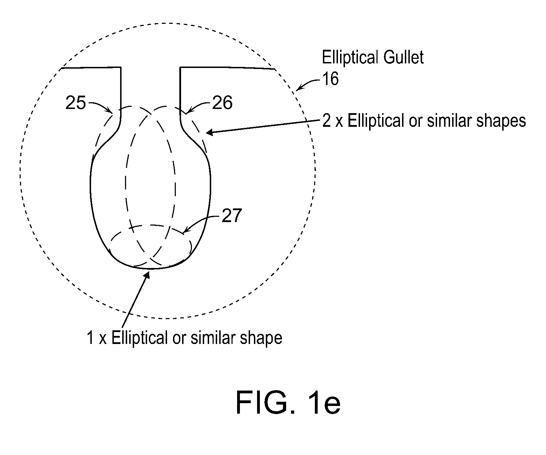

As best shown in Figures 1c, 1d, and 1e, each gullet 16 includes a neck portion 18 defined by parallel side walls extending radially inward from the periphery of the saw blade 10. At the radially inward end of the neck portion 18, the side walls diverge (at about 45°, as best shown in Figure 1d) from each other to form an arcuate base 20. As shown, the bottom of base 20 is shaped like the elongated side of elliptical shape 27. Likewise, the left side of base 20 is shaped like the elongated side of elliptical shape 25, and the right side of base 20 is shaped like the elongated side of elliptical shape 26. As will be appreciated in light of this disclosure, elongating the radii of the gullet at these particular locations (bottom and sides of gullet) improves crack-resistance of blade 10. Example dimensions are shown for each of the elliptical shapes embodied (shown in dashed lines) in the design of gullet 16, including the radius for both long and short axes of each. In short, the elliptical gullets 16 effectively enlarges the radii in the known weak gullet areas, relative to radii in the non-weak gullet areas.

In some embodiments, the cutting elements 12 may take the form of abrasive-laden segments spaced along the periphery or the core 21. The segments may include, for example, superabrasive grains suspended in a metal bond that is brazed or otherwise secured to the periphery or the core 21. For instance, a superabrasive tool may be manufactured by mixing superabrasive particles such as diamond and cubic boron nitride (cBN) with a suitable metal bond such as iron, copper, and tin. The mixture is then compressed in a mold to form the desired shape (e.g., segment having the desired width, length, and curvature). The 'green' form is then sintered at a suitable temperature to form a bonded segment with a plurality of superabrasive particles disposed therein. The segment is attached (e.g., by brazing, arc welding, or laser bonding) to the perimeter of core 21.

Additional details of circular saw blades configured in accordance with embodiments of the present invention and having suitable abrasive segment designs for cutting elements 12 are provided, for example, in U.S. Patent No. 5,518,443 (abrasive segments with alternating volume percentages of abrasive grain), U.S. Patent No. 6,033,295 (portion of the abrasive segment is hardened), and U.S. Patent No. 5,868,125 (crenelated abrasive segments).

In addition, the abrasive segments can be lengthened, in proportion to the blade diameter, to reduce the number of segments, improve fracture/bend resistance, and reduce manufacturing costs. In one such embodiment, the ratio of abrasive segment length to blade diameter is a minimum of 0.2. As previously mentioned, abrasive segments can be used for relatively difficult cutting operations (e.g., for cutting concrete, asphalt, stone, and other hard materials).

Alternatively, saw blade 10 may be provided with cutting elements 12 in the form of teeth, such as typical of a wide range of circular saw blades intended for cutting relatively soft materials such as wood, plastic, and the like. As is known, the teeth may be of any size and shape. In addition, the teeth may be provided with conventional hardened tips, such as fabricated from tungsten carbide, and/or may be provided with the abrasive grain bonded thereto. In one such example embodiment, saw blade 10 is provided with a plurality of teeth having a single layer of abrasive grains chemically bonded to at least a portion of each tooth, as described in U.S. Patent Nos. 6,817,936 and 6,935,940.

Alternatively, saw blade 10 may be provided with cutting elements 12 in the form of a single layer of abrasive grain that is brazed, electroplated, or otherwise attached to the periphery of the core 21 (as opposed to attaching bonded segments or providing teeth at the perimeter). Numerous cutting element 12 configurations and materials can be used in embodiments of the present invention, as will be apparent in light of this disclosure. The present invention is not intended to be limited to any particular cutting element configuration or scheme.

Example dimensions (in millimeters, mm) are also shown in Figures 1a through 1e. These dimensions are merely provided as one specific example embodiment that can be fabricated. However, it will be readily apparent in light of this disclosure that numerous dimensions, as well as elliptical gullet configurations can be used to implement a saw blade in accordance with an embodiment of the present invention. The present invention is not intended to be limited to any particular set or range of blade dimensions or configurations. Rather, embodiments of the present invention are intended to cover any saw blade that can be implemented for its intended purpose and configured with elliptical gullets as described herein.

Figures 2a through 2e illustrate a circular saw blade configured with elliptical gullets, in accordance with another embodiment of the present invention. As can be seen, the circular saw blade 10 has a core 21 with peripheral cutting elements 12 separated by a series of elliptical gullets 216. The previous discussion with reference to Figures 1a through 1e, including discussion relevant to cutting elements 12 and core 21, is equally applicable here, as is the general discussion relevant to elliptical gullets 16 (including example dimensions) and saw blade 10. The main difference of the embodiment shown in Figures 2a through 2d is the design of elliptical gullets 216. Other differences, such as the lack of a cutting depth gauge formed of perforations 33 and dimensional qualities, will be apparent.

As best shown in Figures 2c and 2d, each gullet 216 of this example embodiment includes a slit 218 that extends radially inward from the periphery of the saw blade 10, and essentially beginning at the center of what would be the neck portion 18 of the gullet 16 design. The slit 218 diverges to the right (at about 45°, as best shown in Figure 2c) and essentially traces the outline of what would be the arcuate base 20 of the gullet 16 design. At the end of the trace, slit 218 turns inward and terminates at a circular endpoint 220. The width (kerf) of the slit can be, for example, in the range of 50 microns to 5 millimeters (the embodiment shown is about 1 millimeter). As shown, the bottom of the trace formed by slit 218 is shaped like the elongated side of elliptical shape 227. Likewise, the left side of the trace formed by slit 218 is shaped like the elongated side of elliptical shape 225, and the right side of the trace formed by slit 218 is shaped like the elongated side of elliptical shape 226. Just as with gullet 16, this gullet 216 employs elongated radii at known weak locations (bottom and sides of gullet) to improve crack-resistance of blade 10. Example dimensions are shown for each of the elliptical shapes embodied (shown in dashed lines) in the design of gullet 216, including the radius for both long and short axes of each. In short, the elliptical gullets 216 enlarges the radii in the known weak gullet areas, relative to radii in the non-weak gullet areas.

The foregoing description of the embodiments of the invention has been presented for the purposes of illustration and description. It is not intended to be exhaustive or to limit the invention to the precise form disclosed. Many modifications and variations are possible in light of this disclosure. It is intended that the scope of the invention be limited not by this detailed description, but rather by the claims appended hereto.

## Claims

1. A circular saw blade (10), comprising:
a circular core (21) having a first planar side and a second planar side, a central arbor hole (14), and an outer perimeter;
a plurality of cutting elements (12) at the outer perimeter of the core (21); and
one or more gullets (16) extending radially inward from the perimeter of the core (21), each gullet (16) having a shape that includes at least one elongated curve that enlarges radii in gullet areas prone to cracking, relative to other gullet areas, **characterized in that**
the shape of the gullet (16) includes two curved sides, each connected to a radially inward curved bottom, and the bottom is shaped like the elongated side of a first elliptical shape (27), and each of the two sides is shaped like the elongated side of a second elliptical shape (25, 26).

2. The circular saw blade (10) of claim 1 wherein the first elliptical shape (27) has short and long axes that are both shorter than respective short and long axes of the second elliptical shape (25, 26).

3. The circular saw blade (10) of claim 1 wherein the core (21) includes two or more layers operatively coupled via at least one of a bond material and a mechanical fastener.

4. The circular saw blade (10) of claim 3 wherein the core (21) is a sandwich-type core that includes a middle layer of sound-damping material bonded between the first and second planar sides.

5. The circular saw blade (10) of claim 1 wherein the core (21) is made of non-metallic material or steel.

6. The circular saw blade (10) of claim 1 wherein the cutting elements (12) include at least one of bonded abrasive segments, a single layer of abrasives, and teeth.

7. The circular saw blade (10) of claim 1 wherein there is at least one gullet (16) between neighboring cutting elements (12).

8. The circular saw blade (10) of claim 1 wherein each gullet (16) includes three or more elliptical shapes (25, 26, 27) corresponding to three different gullet areas.

9. The circular saw blade (10) of claim 1 or 2 wherein at least one of the first and the second elliptical shapes (25, 26, 27) is asymmetrical about at least one of its long and short axes.

10. A circular saw blade (10), comprising:
a circular core (21) having a first planar side and a second planar side, a central arbor hole (14);
a plurality of cutting elements (12) at the outer perimeter of the core ((21); and
one or more gullets (16) extending radially inward from the perimeter of the core (21), each gullet (14) having a shape that includes three or more elliptical shapes (25, 26, 27) corresponding to three different gullet areas, thereby enlarging radii of those gullet areas, relative to other gullet areas, **characterized in that**
the shape of the gullet (16) includes two curved sides, each connected to a radially inward curved bottom, and the bottom is shaped like the elongated side of a first elliptical shape (27), and each of the two sides is shaped like the elongated side of a second elliptical shape (25, 26).

11. The circular saw blade (10) of claim 1, 2 or 10 wherein the gullet (16) includes an opening that defines the two sides and the bottom, or a slit (218) that defines the two sides and the bottom.

12. The circular saw blade (10) of claim 1, 2 or 10 wherein the elliptical shapes (25, 26, 27) are symmetrical about their respective long and short axes.

13. The circular saw blade (10) of claim 10 wherein at least one of the elliptical shapes (25, 26, 27) is asymmetrical about at least one of its long and short axes.

## Patentansprüche

1. Kreissägeblatt (10), umfassend:
einen runden Kern (21) mit einer ersten flachen Seite und einer zweiten flachen Seite, einer mittigen Bohrung (14) und einem Außenumfang;
eine Vielzahl von Schneidelementen (12) am Außenumfang des Kerns (21); und eine oder mehrere Kerben (16), die sich sternförmig vom Umfang des Kerns (21) nach Innen erstrecken, wobei jede Kerbe (16) eine Form hat, die mindestens einen verlängerten Bogen umfasst, der die Radien im Bereich der Kerbe, die im Verhältnis zu anderen Kerbbereichen anfällig für Risse sind, erweitert, dadurch charakterisiert, dass
die Form der Kerbe (16) zwei gebogene Seiten umfasst, wobei jede Seite mit einer sternförmig nach innen gebogener Unterseite verbunden ist, und wobei die Unterseite wie die verlängerte Seite einer ersten elliptischen Form (27) geformt ist, und wobei jede der beiden Seiten wie die verlängerte Seite einer zweiten elliptischen Form (25, 26) geformt ist.

2. Kreissägeblatt (10) nach Anspruch 1, wobei die erste elliptische Form (27) kurze und lange Achsen hat, die beide kürzer sind als die entsprechenden kurzen und langen Achsen der zweiten elliptischen Form (25, 26).

3. Kreissägeblatt (10) nach Anspruch 1, wobei der Kern (21) zwei oder mehrere Schichten umfasst, die wirksam über mindestens entweder ein Bindungsmaterial oder einen mechanischen Verschluss verbunden sind.

4. Kreissägeblatt (10) nach Anspruch 3, wobei der Kern (21) ein Kern in Sandwichbauweise ist, der eine mittlere Schicht aus schalldämmendem Material umfasst und zwischen der ersten und zweiten flachen Seite eingebunden ist.

5. Kreissägeblatt (10) nach Anspruch 1, wobei der Kern (21) aus nicht-metallischem Material oder Stahl besteht.

6. Kreissägeblatt (10) nach Anspruch 1, wobei die Schneidelemente (12) mindestens entweder verbundene Schleifsegmente, eine einzelne Schicht Schleifmittel oder Zähne umfassen.

7. Kreissägeblatt (10) nach Anspruch 1, wobei sich zwischen den angrenzenden Schneidelementen (12) mindestens eine Kerbe (16) befindet.

8. Kreissägeblatt (10) nach Anspruch 1, wobei jede Kerbe (16) drei oder mehrere elliptische Formen (25, 26, 27) umfasst, die zu drei verschiedenen Kerbbereichen gehören.

9. Kreissägeblatt (10) nach Anspruch 1 oder 2, wobei mindestens eine der ersten und der zweiten elliptischen Formen (25, 26, 27) asymmetrisch zu mindestens einer ihrer langen und kurzen Achsen ist.

10. Kreissägeblatt (10), umfassend:
einen runden Kern (21) mit einer ersten flachen Seite und einer zweiten flachen Seite, eine mittigen Bohrung (14);
eine Vielzahl von Schneidelementen (12) am Außenumfang des Kerns (21); und einer oder mehreren Kerben (16), die sich sternförmig vom Umfang des Kerns (21) nach Innen erstrecken, wobei jede Kerbe (14) eine Form hat, die mindestens drei oder mehrere elliptische Formen (25, 26, 27) umfasst, die den drei unterschiedlichen Kerbbereichen entsprechen und dabei die Radien dieser Kerbbereiche relativ zu den anderen Kerbbereichen erweitern, dadurch charakterisiert, dass
die Form der Kerbe (16) zwei gebogene Seiten umfasst, wobei jede Seite mit einem sternförmig nach innen gebogener Unterseite verbunden ist, und wobei die Unterseite wie die verlängerte Seite einer ersten elliptischen Form (27) geformt ist, und wobei jede der beiden Seiten wie die verlängerte Seite einer zweiten elliptischen Form (25, 26) geformt ist.

11. Kreissägeblatt (10) nach Anspruch 1, 2 oder 10, wobei die Kerbe (16) eine Öffnung umfasst, die die beiden Seiten und die Unterseite oder einen Schlitz (218) definiert, der die beiden Seiten und die Unterseite definiert.

12. Kreissägeblatt (10) nach Anspruch 1, 2 oder 10, wobei die elliptischen Formen (25, 26, 27) symmetrisch zu ihren entsprechenden langen und kurzen Achsen sind.

13. Kreissägeblatt (10) nach Anspruch 10, wobei mindestens eine der elliptischen Formen (25, 26, 27) asymmetrisch zu mindestens einer ihrer langen und kurzen Achsen ist.

## Revendications

1. Lame de scie circulaire (10) comprenant :
un noyau circulaire (21) ayant un premier côté plan et un second côté plan, un alésage central (14) et un périmètre externe ;
plusieurs éléments de découpe (12) sur le périmètre externe du noyau (21) ; et une ou plusieurs gorges (16) s'étendant radialement vers l'intérieur depuis le périmètre du noyau (21),
chaque gorge (16) ayant une forme qui inclut au moins une courbe allongée qui augmente ses rayons dans les zones des gorges enclines à la fissuration, par rapport aux autres zones de gorges, **caractérisée en ce que**
la forme de la gorge (16) inclut deux côtés incurvés, chacun raccordé à un fond incurvé radialement vers l'intérieur, et le fond est mis en forme comme le côté allongé d'une première forme elliptique (27), et chacun des deux côtés est mis en forme comme le côté allongé d'une deuxième forme elliptique (25, 26).

2. Lame de scie circulaire (10) selon la revendication 1, dans laquelle la première forme elliptique (27) a des petits et grands axes qui sont tous les deux plus petits que les petits et grands axes respectifs de la deuxième forme elliptique (25, 26).

3. Lame de scie circulaire (10) selon la revendication 1, dans laquelle le noyau (21) inclut au moins deux couches couplées fonctionnellement à au moins un parmi un matériau de liaison et un élément de fixation mécanique.

4. Lame de scie circulaire (10) selon la revendication 3 dans laquelle le noyau (21) est un noyau de type sandwich qui inclut une couche intermédiaire de matériau antibruit lié entre le premier et le second côté plan.

5. Lame de scie circulaire (10) selon la revendication 1 dans laquelle le noyau (21) est constitué d'un matériau non-métallique ou d'acier.

6. Lame de scie circulaire (10) selon la revendication 1 dans laquelle les éléments de découpe (12) incluent au moins un parmi des segments abrasifs liés, une unique couche d'abrasifs et des dents.

7. Lame de scie circulaire (10) selon la revendication 1 dans laquelle il y a au moins une gorge (16) entre les éléments de découpe adjacents (12).

8. Lame de scie circulaire (10) selon la revendication 1 dans laquelle chaque gorge (16) inclut au moins trois formes elliptiques (25, 26, 27) correspondant à trois différentes zones de gorges.

9. Lame de scie circulaire (10) selon la revendication 1 ou 2 dans laquelle au moins un parmi la première et la seconde forme elliptique (25, 26, 27) est asymétrique autour d'au moins un entre ses petits et grands axes.

10. Lame de scie circulaire (10) comprenant :
un noyau circulaire (21) ayant un premier côté plan et un second côté plan, un alésage central (14) ; plusieurs éléments de découpe (12) sur le périmètre externe du noyau (21), et une ou plusieurs gorges (16) s'étendant radialement vers l'intérieur depuis le périmètre du noyau (21),
chaque gorge (16) ayant une forme qui inclut au moins trois formes elliptiques (25, 26, 27) correspondant à trois différentes zones de gorges, ce qui augmente les rayons de ces zones de gorges par rapport à d'autres zones de gorges,
**caractérisée en ce que**
la forme de la gorge (16) inclut deux côtés incurvés, chacun raccordé à un fond incurvé radialement vers l'intérieur, et le fond est mis en forme comme le côté allongé d'une première forme elliptique (27), et chacun des deux côtés est mis en forme comme le côté allongé d'une deuxième forme elliptique (25, 26).

11. Lame de scie circulaire (10) selon la revendication 1, 2 ou 10 dans laquelle la gorge (16) inclut une ouverture qui définit les deux côtés et le fond, ou une fente (218) qui définit les deux côtés et le fond.

12. Lame de scie circulaire (10) selon la revendication 1, 2 ou 10 dans laquelle les formes elliptiques (25, 26, 27) sont symétriques par rapport à leurs petits et grands axes respectifs.

13. Lame de scie circulaire (10) selon la revendication 10 dans laquelle au moins une des formes elliptiques (25, 26, 27) est asymétrique par rapport à au moins un de ses petits et grands axes.
